(19) Europäisches Patentamt
European Patent Office
Office européen des brevets

(11) EP 0 870 219 B1

(12) EUROPÄISCHE PATENTSCHRIFT

(45) Veröffentlichungstag und Bekanntmachung des Hinweises auf die Patenterteilung:
**01.03.2000 Patentblatt 2000/09**

(21) Anmeldenummer: **96946197.9**

(22) Anmeldetag: **16.12.1996**

(51) Int Cl.[7]: **G05B 23/02**

(86) Internationale Anmeldenummer:
**PCT/DE96/02417**

(87) Internationale Veröffentlichungsnummer:
**WO 97/24648 (10.07.1997 Gazette 1997/30)**

(54) **VERFAHREN ZUR REGELUNG EINES VERZÖGERUNGSBEHAFTETEN PROZESSES MIT AUSGLEICH SOWIE REGELEINRICHTUNG ZUR DURCHFÜHRUNG DES VERFAHRENS**

METHOD OF CONTROLLING A SELF-COMPENSATING PROCESS SUBJECT TO DECELERATION, AND CONTROL DEVICE FOR CARRYING OUT THE METHOD

PROCEDE ET DISPOSITIF DE REGULATION D'UN PROCESSUS AUTO-COMPENSATEUR SUSCEPTIBLE DE RALENTISSEMENT

(84) Benannte Vertragsstaaten:
**AT CH DE ES FR GB IT LI**

(30) Priorität: **27.12.1995 DE 19548909**

(43) Veröffentlichungstag der Anmeldung:
**14.10.1998 Patentblatt 1998/42**

(73) Patentinhaber: **SIEMENS AKTIENGESELLSCHAFT**
**80333 München (DE)**

(72) Erfinder: **PFEIFFER, Bernd-Markus**
**D-76199 Karlsruhe (DE)**

(56) Entgegenhaltungen:
**EP-A- 0 379 215**
**EP-A- 0 416 368**
**EP-A- 0 520 233**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Regelung eines verzögerungsbehafteten Prozesses mit Ausgleich, insbesondere zur Temperaturregelung, sowie eine Regeleinrichtung zur Durchführung des Verfahrens.

Ein adaptiver Regler für verzögerungsbehaftete Prozesse mit Ausgleich ist aus der DE-OS 39 29 615 bekannt. Er besitzt die Fähigkeit, seine Parameter selbsttätig an die sich zeitlich ändernden Eigenschaften einer Regelstrecke anzupassen. Dazu wird die Antwort des Prozesses auf eine sprungförmige Verstellung des Sollwertes aufgezeichnet und in einem iterativen Verfahren nach einem PTn-Modell gesucht, mit welchem diese Sprungantwort möglichst gut nachgebildet werden kann. Als optimal werden die Parameter des PTn-Modells angesehen, mit welchen der nach der Methode der kleinsten Fehlerquadrate berechnete Fehler zwischen den Sprungantworten des PTn-Modells und des realen Prozesses minimal ist. Nach Abschluß der Prozeßidentifikation wird anhand des ermittelten Prozeßmodells ein Regler nach dem Betragsoptimum entworfen. Betrachtet werden dort einschleifige Regelkreise mit Reglern vom PID-Typ. Die zu regelnden Prozesse zeigen ein Verhalten mit Ausgleich, d. h., sie stellen eine Regelstrecke dar, bei der die Sprungantwort in einen neuen Beharrungszustand einläuft.

Ein Nachteil dieses Verfahrens ist, daß bei der Inbetriebnahme des bekannten adaptiven Reglers ein oft zeitaufwendiger Sprungversuch durchgeführt werden muß, bevor der Regler optimiert werden kann. Dieser Versuch ist erst dann abgeschlossen, wenn die Regelgröße nach dem Sollwertsprung wieder näherungsweise auf den neuen stationären Endwert eingeschwungen ist. Das Kriterium für einen stationären Zustand muß dabei sorgfältig ausgewählt werden, da bei einem zu strengen Kriterium einerseits die Identifikation sehr viel Zeit beansprucht und ein zu weit formuliertes Kriterium andererseits das Risiko einer fehlerhaften Identifikation erhöht. Zudem ist die mit einem linearen PID-Regler erzielbare Regelgüte prinzipiell begrenzt, da ein schnelles Anregelverhalten mit einem Überschwingen der Regelgröße erkauft werden muß.

Nachteilig bei dem bekannten Identifikationsverfahren wirken sich auch kriechende Zeitkonstanten aus, d. h. Pole, die sehr nahe am Ursprung der Laplace-Ebene liegen und zu einem integratorähnlichen Verhalten des Prozesses führen, so daß nach einem Stellgrößensprung sehr lange kein stationärer Zustand erreicht werden kann. Infolgedessen ist die bekannte Identifikation anhand einer vollständigen Sprungantwort bei einem derartigen Prozeßverhalten sehr zeitaufwendig.

Aus der EP 0 520 233 A2 ist eine Regeleinrichtung mit einer Einrichtung zur Identifikation eines Prozesses bekannt. Der Identifikationseinrichtung sind die Stellgröße und die Regelgröße aufgeschaltet. Durch eine Einrichtung zur Parameterberechnung werden die Parameter eines linearen Reglers, der in Abhängigkeit von der Regelabweichung die Regelgröße berechnet, eingestellt. Dabei werden die Reglerparameter in Abhängigkeit des jeweiligen Prozeßmodells und dessen Parameter berechnet.

Der Erfindung liegt die Aufgabe zugrunde, ein Verfahren zur Regelung eines verzögerungsbehafteten Prozesses mit Ausgleich, insbesondere zur Temperaturregelung, zu finden, mit welchem die obengenannten Nachteile vermieden werden, sowie eine Regeleinrichtung zur Durchführung des Verfahrens zu schaffen.

Zur Lösung dieser Aufgabe weist das neue Verfahren der eingangs genannten Art die im kennzeichnenden Teil des Anspruchs 1 angegebenen Merkmale auf. Weiterbildungen des erfindungsgemäßen Verfahrens sind in den Ansprüchen 2 bis 10 beschrieben. Eine Regeleinrichtung mit den in Anspruch 11 genannten Merkmalen ist zur Durchführung des Verfahrens geeignet.

Die Erfindung hat den Vorteil, daß auf einen zeitaufwendigen Sprungversuch bei der Inbetriebnahme eines Reglers gänzlich verzichtet werden kann. Bereits während der ersten Phase eines Ausregelvorgangs nach einem Sollwertsprung wird ein einfaches IT1-Modell an den Prozeß angenähert, und der erste Sollwert kann zeitoptimal und praktisch überschwingungsfrei angefahren werden. Dies wirkt sich insbesondere bei der Regelung von Temperaturen auf einen vorgegebenen Sollwert mit Hilfe einer verstellbaren Heizung vorteilhaft aus, bei der ein Regler die Temperatur gegen äußere Störungen konstant halten und bei Änderungen der Sollwertvorgabe, beispielsweise an einem chemischen Prozeß, so schnell wie möglich die gewünschte neue Temperatur einstellen soll. Der adaptive Regler paßt sich ohne Parametrierung und ohne Vorkenntnisse über den Prozeß automatisch an beliebige Temperaturstrecken an. Die Optimierung des Reglers erfolgt bei der Inbetriebnahme, ohne daß hierzu Eingaben des Bedienpersonals erforderlich wären. Als Kriterium für das Erreichen eines stationären Zustands wird die Änderungsgeschwindigkeit der Regelgröße ausgewertet und überprüft, wann diese nach dem Rücksetzen der Stellgröße einen vorgebbaren Grenzwert unterschreitet. Danach wird der Prozeß anhand eines exakteren Modells, insbesondere eines VZ2-Modells ohne Integralanteil, identifiziert. Dieses Modell steht somit bereits nach dem ersten Ausregelvorgang zur Verfügung und kann zur Reglereinstellung herangezogen werden. Mit Hilfe des IT1-Modells bei der Inbetriebnahme und des VZ2-Modells nach erstmaligem Erreichen eines stationären Zustands können durch den Grenzwertsatz bzw. durch eine Betrachtung der Trajektorien im Zustandsraum Abschaltzeitpunkte für eine zeitoptimale Anfahrsteuerung in einem nichtlinearen Betrieb ermittelt werden. Die Regelung reagiert daher wesentlich schneller auf Sollwertsprünge, als es eine lineare Regelung vermag. Wenn die Regelgröße nach einem Sollwertsprung näherungsweise wieder einen stationären Zustand erreicht hat, wird anhand des exakteren Modells ein linearer Regler eingestellt, der zur Ausregelung kleinerer Abweichungen

vom Sollwert sowie äußerer Störungen im linearen Betrieb die Stellgröße für den Prozeß erzeugt. Daher bleiben auch bei zeitoptimaler Vorsteuerung die Vorteile der linearen Regelung, beispielsweise mit einem PI- oder PID-Regler, bezüglich der stationären Genauigkeit erhalten.

Die in Temperaturregelungen vorkommenden Strecken sind im allgemeinen mit einfachen PI- oder PID-Reglern beherrschbar. Eine zeitoptimale Vorsteuerung der Heizleistung in einem nichtlinearen Betrieb bewirkt aber, daß auch bei kleineren Sollwertsprüngen zunächst mit Vollgas angeheizt wird, ohne daß hierfür der lineare Regler so scharf eingestellt werden müßte, daß er zum Überschwingen neigt.

Durch die Verwendung eines IT1-Modells zur Identifizierung des Prozesses in einer frühen Phase einer ersten Sprungantwort wird der Nachteil exakterer Modelle mit Ausgleich vermieden, daß zu diesem Zeitpunkt noch keine zuverlässigen Schätzungen über die stationäre Prozeßverstärkung möglich sind. Die maximale Anstiegsgeschwindigkeit ist vielmehr vom Verhältnis der Verstärkung zur dominierenden Zeitkonstante, beispielsweise eines VZ2-Modells, abhängig. Das IT1-Modell enthält aber bereits einen Hinweis auf die Verzugszeit, die der kleinen Zeitkonstante eines VZ2-Modells entspricht, und auf die Anstiegsgeschwindigkeit. Es reicht somit zur Bestimmung eines zeitoptimalen Abschaltpunktes aus, der in jedem Fall auf der sicheren Seite liegt. Erst nach einer kurzen Zwischenabschaltung der Heizung wird dann der Prozeß auf der Grundlage eines exakteren Modells, z. B. eines VZ2-Modells, identifiziert, das auch für die Ermittlung der Parameter eines linearen Reglers geeignet ist. Ein D-Anteil im linearen Regler ist nicht erforderlich, weder zur Bedämpfung von Oszillationen, die im allgemeinen bei Temperaturregelungen nicht auftreten, noch zur Beschleunigung des Anregelverhaltens bei Sollwertsprüngen, da hier der Regler mit zeitoptimaler Vorsteuerung im nichtlinearen Betrieb arbeitet. Nach weiteren Sollwertsprüngen können Nachoptimierungen der Modell- und Reglerparameter vorgenommen werden.

Zum zeitoptimalen Aufheizen wird die volle Stellgröße bis zu einem bestimmten Zeitpunkt ausgegeben, der sich bei einem VZ2-Modell aus der Betrachtung der Systemtrajektorien im Zustandsraum ergibt. Danach wird auf die mit der Modellverstärkung abgeschätzte stationäre Stellgröße umgeschaltet und damit weiter geheizt. Ein Übergang auf PI-geregelten Betrieb erfolgt erst, nachdem der Sollwert näherungsweise erreicht ist. Zum stoßfreien Umschalten wird ein Integralanteil des linearen Reglers so initialisiert, daß der Regler die stationäre Stellgröße ausgibt. Eine Regeleinrichtung zur Durchführung des Verfahrens kann vorteilhaft mit einer internen Ablaufsteuerung mit mehreren verschiedenen Phasen, die sich in den Betriebsarten des Reglers sowie den Modellen, die der Prozeßidentifikation zugrundegelegt werden, unterscheiden, realisiert werden. Die Regeleinrichtung kann gleichermaßen als Hardwareschaltung oder als Recheneinheit mit einem Programmspeicher, in den ein geeignetes Betriebsprogramm geladen wurde, ausgeführt werden.

Physikalische Modelle für Temperaturregelstrecken lassen sich aus elementaren PT1-Modellen für die einzelnen Teilsysteme mit ihrer Wärmekapazität und den entsprechenden Wärmeübergängen aufbauen. Insgesamt erhält man so VZn-Modelle von meist niedriger Ordnung. An realen Prozessen lassen sich selten mehr als drei relevante Zeitkonstanten nachweisen. Typische Verstärkungen der Prozesse liegen je nach Auslegung der Heizung zwischen 0,5 und 3, Zeitkonstanten zwischen einer und mehreren tausend Sekunden. Im allgemeinen sind Temperaturregelstrecken selbst nicht schwingungsfähig, d. h., sie haben im offenen Regelkreis nur reelle Polstellen und sie weisen meist nur geringfügige Totzeiten auf. Übertragungsnullstellen, d. h. Zählerterme höherer Ordnung in der Übertragungsfunktion, treten auf, wenn die Ausgangstemperatur als Regelgröße nicht am Ende der Wärmeflußkette abgegriffen wird, z. B. wenn bei einem von innen beheizten Ofen die Wärmekapazität der Isolierung oder der Ofenmauerung eine Rolle spielt. Nullstellen können überschwingendes Regelverhalten verursachen. Es fehlt oft eine aktive Kühlung und man beobachtet sehr viel kleinere negative Temperaturgradienten als positive. Dieser Effekt kann mit einem linearen Modell erklärt werden, dem keine negativen Stellgrößen zur Verfügung stehen.

Nichtlinearitäten der Temperaturregelstrecke entstehen gegebenenfalls durch Phasenübergänge, beispielsweise Verdampfen, oder Stellglieder mit nichtlinearer Kennlinie, z. B. Ventile.

Anhand der Figuren, die ein Ausführungsbeispiel der Erfindung darstellen, werden im folgenden die Erfindung sowie Ausgestaltungen und Vorteile näher erläutert.

Es zeigen:

| | |
|---|---|
| Figur 1 | ein Strukturbild einer Regeleinrichtung, |
| Figur 2 | ein Petri-Netz einer Ablaufsteuerung für eine Regeleinrichtung nach Figur 1, |
| Figuren 3 und 4 | Zeitdiagramme eines Sollwert- und Regelgrößenverlaufs bzw. eines Stellgrößenverlaufs an einer simulierten Regelstrecke. |

Eine Regeleinrichtung nach Figur 1 dient zur Regelung einer Regelgröße x, z. B. einer Temperatur, die an einem Prozeß P gemessen wird. Ein Subtrahierglied S dient zum Vergleich der gemessenen Regelgröße x mit einem Sollwert w und bildet ein Regelabweichungssignal xd, das auf einen linearen Regler R geführt ist. Im linearen Betrieb erzeugt der Regler R eine Stellgröße y für den Prozeß P. Der Regelkreis ist somit geschlossen. Die Stellgröße y und die Regelgröße x sind einer Einrichtung IE zur Identifikation des Prozesses P aufgeschaltet, die zur Berechnung optimaler Parameter wahlweise eines IT1-Modells oder zumindest eines exakteren Modells umschaltbar ist. Dazu können in der Einrichtung IE Signalverläufe der Stellgröße y und der Regelgröße x abgespeichert werden. Der Verlauf der Stellgröße y wird dem jeweils gewählten Modell zugeführt, dessen Parameter so modifiziert werden, daß die simulierte Antwort des mit dem abgespeicherten Stellgrößenverlauf angeregten Modells möglichst gut mit dem abgespeicherten realen Verlauf der Regelgröße x übereinstimmt. Als optimal werden diejenigen Parameter angesehen, die nach der Methode der kleinsten Fehlerquadrate zur geringsten Abweichung führen. Mit einer Ablaufsteuerung AS, welche die mit der Einrichtung IE ermittelten Parameter, den Sollwert w sowie die Regelabweichung xd, als Eingangsgrößen erhält, werden die Parameter des linearen Reglers R, der beispielsweise ein PI- oder PID-Regler sein kann, berechnet. Zudem erzeugt die Ablaufsteuerung AS ein Umschaltsignal zur Auswahl des jeweiligen Prozeßmodells in der Einrichtung IE und ein Umschaltsignal zur Auswahl, ob im linearen Betrieb die Ausgangsgröße des Reglers R oder im nichtlinearen Betrieb eine von der Ablaufsteuerung vorgegebene Größe als Stellgröße y auf den Prozeß P geführt werden soll.

Figur 1 stellt lediglich ein funktionelles Strukturbild einer erfindungsgemäßen Regeleinrichtung dar. Selbstverständlich können alle Funktionsblöcke in einem einzigen elektronischen Gerät zusammengefaßt oder auch dezentral auf verschiedene Geräte verteilt werden.

Eine Ablaufsteuerung AS enthält entsprechend dem in Figur 2 dargestellten Zustandsübergangsdiagramm, das auch als Petri-Netz bezeichnet wird, sieben verschiedene Zustände oder Phasen, die im folgenden am Beispiel einer Temperaturregelung beschrieben werden. Diese Phasen sind mit Bezugszeichen 1 ... 7 versehen. Zur Einteilung der Zeitverläufe in den Figuren 3 und 4 in diese sieben Phasen sind auch an der Oberkante des Zeitdiagramms in Figur 4 die jeweiligen Bezugszeichen angebracht.

Unmittelbar nach dem Einschalten des Reglers wird in Phase 1 eingetreten, in welcher die Regeleinrichtung durch die Ablaufsteuerung den Wert Null als Stellgröße y ausgibt und auf einen Sollwertsprung wartet.

Nachdem ein Sollwertsprung erkannt wurde, wird in Phase 2 mit Vollgas geheizt.

Nach 30 % des Anstiegs wird in Phase 3 eingetreten und ein zeitdiskretes IT1-Modell

$$x_{k+1} - x_k = a_2(x_k - x_{k-1}) + b_1 y_k + b_2 y_{k-1}$$

identifiziert mit k als Zeitindex. Es entsteht aus dem allgemeinen ARMA-Modell zweiter Ordnung

$$x_{k+1} + a_1 x_k + a_2 x_{k-1} = b_1 y_k + b_2 y_{k-1} \quad \overset{z}{\leftrightarrow} \quad G(z) = \frac{b_1 z^{-1} + b_2 z^{-2}}{1 + a_1 z^{-1} + a_2 z^{-2}}$$

durch die Spezifikation $a_1 = -(1+a_2)$. Es wird zu einem zeitkontinuierlichen IT1-Modell

$$G(s) = \frac{x(s)}{y(s)} = \frac{K_1}{s(T_1 s + 1)}; \quad K_1 = \lim_{z \to 1}(1 - z^{-1})G(z) = \frac{b_1 + b_2}{1 - a_2}; \quad T = -\frac{T_0}{\ln a_2}$$

mit $T_0$ als Abtastzeit umgerechnet, da die Pole im z-Bereich über $z = e^{T_0 s}$ mit den Polen im s-Bereich zusammenhängen. Die zeitoptimale Steuerung eines IT1-Modells vom Anfangszustand $x_0$ auf den Endzustand x=w darf nach dem Satz von Feldbaum nur eine Umschaltung zwischen maximaler und minimaler Stellgröße enthalten:

$$y = y_{\max} \forall t < t_{stop}$$

$$y = 0 \ \forall t \geq t_{stop}$$

Der Abschaltzeitpunkt $t_{stop}$ läßt sich aus dem Endwertsatz der Laplace-Transformation bestimmen. Die Antwort des IT1-Gliedes auf einen Rechteckimpuls

$$y(t) = y_{\max}(h(t) - h(t - t_{stop}))$$

der Höhe $y_{max}$ lautet im Bildbereich:

$$x(s)=x_0 + \frac{K_1}{s(T_1s+1)}y_{max}\left(\frac{1}{s}-e^{-t_{stop}s}\frac{1}{s}\right)$$

Der stationäre Endwert

$$x(t \to \infty) = \lim_{s\to 0} sx(s) = x_0 + K_1 y_{max} t_{stop}$$

wird gleich *w* für

$$t_{stop} = \frac{w-x_0}{K_1 y_{max}}$$

Diese Abschätzung des Abschaltzeitpunkts liegt jedenfalls auf der sicheren Seite, da das IT1-Modell eine vollständige Wärmeisolation annimmt, während in jedem realen Prozeß Wärmeverluste an die Umgebung auftreten, die sogar ein noch längeres Aufheizen mit Vollgas gestatten würden.

In Phase 3 wird weiter voll geheizt bis zum vorbestimmten Abschaltzeitpunkt, durch den Phase 4 eingeleitet wird.

In Phase 4 wird die Heizung abgeschaltet und gewartet, bis sich der Aufheizvorgang deutlich verlangsamt hat, d. h. die durchschnittliche Temperaturänderung pro Abtastschritt, gemittelt über fünf Abtastschritte, kleiner als 0,1 % der Sprunghöhe ist.

Erst danach wird in Phase 5 eingetreten, in der ein grobes VZ2-Modell identifiziert wird, dessen Übertragungsfunktion im Laplace-Bereich

$$G(s) = \frac{K_2}{(T_2s+1)(T_3s+1)}$$

mit $T_2 > T_3$ lautet. Für dieses Modell wird ein PI-Regler

$$G_R(s) = K_p\left(1+\frac{1}{T_ns}\right)$$

so entworfen, daß seine Nullstelle rechts vom langsamen Streckenpol liegt: $T_n=1,2*T_2$. Dadurch entsteht im relevanten Teil der s-Ebene eine "interlaced constellation" mit v.r.n.l.: Pol, Nullstelle, Pol, wobei der erste Pol und die Nullstelle durch den PI-Regler R, der zweite Pol durch den Prozeß P verursacht werden. Diese Konstellation führt auch bei großen Verstärkungen noch nicht zu Verzweigungen der Wurzelortskurve. Daher kann standardmäßig die Reglerverstärkung $K_p=5/K_2$ gewählt werden.

Der Integrator des Reglers wird so initialisiert, daß zum Zeitpunkt der Übernahme durch den Regler die aus dem VZ2-Modell geschätzte stationäre Stellgröße ausgegeben wird.

In Phase 5 arbeitet der PI-Regler unverändert, bis der nächste positive Sollwertsprung auftritt.

Danach wird in Phase 6 ein sehr viel präziseres VZ2-Modell identifiziert. Die zeitoptimale Steuerung eines VZ2-Modells vom neuen Anfangszustand $x_0$ auf den neuen Endzustand $x=w$ beginnt mit maximaler Stellgröße und schaltet dann um auf die stationär erforderliche Stellgröße $y_\infty = w/K_2$:

$$y = y_{max} \forall t < t_{stop}$$

$$y = y_\infty \forall t \geq t_{stop}$$

Der neue Abschaltzeitpunkt $t_{stop}$ läßt sich nicht aus dem Endwertsatz bestimmen, da das VZ2-Modell für

beliebiges $t_{stop}$ irgendwann nach dem Abschaltzeitpunkt den Endzustand x=w erreicht. Daher ist eine Betrachtung der Trajektorien im Zustandsraum erforderlich. Mit den Zuständen

$$z_1 = w-x, \qquad z_2 = dz_1/dt = -dx/dt, \qquad \bar{z} = (z_1, z_2)^T$$

erhält man für *w=const.* folgende Zustandsdarstellung des VZ2-Modells:

$$\bar{z}' = A\bar{z} + \bar{b}y + \bar{g}$$

$$x = \bar{c}^T\bar{z} + w$$

mit

$$A = \begin{bmatrix} 0 & 1 \\ -\frac{1}{T_2T_3} & -\frac{T_2+T_3}{T_2T_3} \end{bmatrix}, \quad \bar{b} = \begin{bmatrix} 0 \\ -\frac{K_2}{T_2T_3} \end{bmatrix}, \quad \bar{g} = \begin{bmatrix} 0 \\ \frac{w}{T_2T_3} \end{bmatrix},$$

$$\bar{c}^T = \begin{bmatrix} -1 & 0 \end{bmatrix}$$

Mit der Zustands-Transformation

$$\bar{z} = Q\bar{v}, Q^{-1} = \begin{bmatrix} 1 & T_3 \\ 1 & T_2 \end{bmatrix}$$

wird das System auf Diagonalform transformiert:

$$\bar{v}' = Q^{-1}AQ\bar{v} + Q^{-1}\bar{b}y + Q^{-1}\bar{g}$$

$$x = \bar{c}^TQ\bar{v} + w$$

mit

$$Q^{-1}AQ = \begin{bmatrix} -\frac{1}{T_2} & 0 \\ 0 & -\frac{1}{T_3} \end{bmatrix}, \quad Q^{-1}\bar{b} = \begin{bmatrix} -\frac{K_2}{T_2} \\ -\frac{K_2}{T_3} \end{bmatrix}, \quad Q^{-1}\bar{g} = \begin{bmatrix} \frac{w}{T_2} \\ \frac{w}{T_3} \end{bmatrix},$$

$$\bar{c}^TQ = \begin{bmatrix} -\frac{T_2}{T_2-T_3} & \frac{T_3}{T_2-T_3} \end{bmatrix}$$

Die nun entkoppelten Differentialgleichungen für die beiden neuen Zustände $v_i$, $i \in \{1,2\}$ können getrennt gelöst werden. Ausgehend von einem Anfangszustand $v_{i0}$ erhält man als Antwort auf einen Stellgrößensprung der Höhe $y_{max}$ den Zeitverlauf

$$v_i(t) = (K_2 y_{max} - w + v_{i0}) e^{-t/T_i} + w - K_2 y_{max}$$

Der gewünschte Übergang von $x=x_0$ auf $x=w$ entspricht in den neuen Koordinaten einem Übergang von

$$\bar{v}_0 = \begin{bmatrix} w - x_0 \\ w - x_0 \end{bmatrix}$$

in den Ursprung der v-Ebene. Die optimale überschwingfreie Trajektorie erhält man, wenn voll geheizt wird, bis $v_1$ verschwindet. Aus der Forderung $v_1(t_{stop}) \stackrel{!}{=} 0$ erhält man den Umschaltzeitpunkt

$$t_{stop} = -T_2 \ln\left(1 - \frac{w - x_0}{K_2 y_{max}}\right)$$

Anschließend läuft die Trajektorie für $y=y_\infty$ entlang der $v_2$-Achse in den Ursprung.

In Phase 6 wird also voll geheizt bis zum zeitoptimalen Umschaltzeitpunkt, der Phase 7 einleitet.

In Phase 7 wird viermal solange die stationäre Stellgröße ausgegeben, bevor an den neu entworfenen PI-Regler R übergeben und wieder in Phase 5 eingetreten wird.

Aus dieser Vorgehensweise resultieren zwei Punkte, die sich möglicherweise nachteilig auswirken können:

(1) Bei Systemen mit Übertragungsnullstellen können leichte Überschwinger entstehen, da die zeitoptimale Lösung für ein Modell ohne Nullstellen entworfen ist.

(2) Vom Beginn des Sollwertsprungs bis zum Fünffachen der Umschaltzeit ist der Prozeß im gesteuerten Betrieb, d. h., es gibt keine Rückführung zur Kompensation von Störungen, die während dieser Aufheizspanne auftreten. Solche Störungen können erst nach der Aufheizphase vom PI-Regler R ausgeregelt werden.

In den Figuren 3 und 4 sind die Einstellvorgänge bei einer Regelung eines Prozesses zweiter Ordnung protokolliert. Der Prozeß entspricht einem VZ2-Modell mit der Verstärkung K2 = 1 und den beiden Zeitkonstanten T2 = 250 sec sowie T3 = 100 sec. Zum Vergleich ist jeweils das Verhalten eines nach dem aus der DE-OS 39 29 615 bekannten Verfahren optimierten PI-Reglers anhand der Verläufe der Stellgröße yv(t) und der Regelgröße xv(t) mit durchbrochenen dünnen Linien eingezeichnet.

In Figur 3 sind der Verlauf der Führungsgröße w(t) als dünne Linie, der Verlauf der Regelgröße x(t), der mit einer neuen Regeleinrichtung gewonnen wurde, als dicke Linie dargestellt. In Figur 4 ist der Verlauf der Stellgröße y (t) mit einer dicken Linie eingezeichnet. Dabei ist zu beachten, daß die Verläufe xv(t) und yv(t) mit einem bereits optimierten PI-Regler gewonnen wurden, d. h., daß bei dem bekannten Regler vorab ein nicht dargestellter Sprungversuch durchgeführt werden mußte. Die Parameter des zum Vergleich eingesetzten PI-Reglers wurden eingestellt zu Kp = 5 und Tn = 300.

In Figur 4 sind sehr gut die verschiedenen Phasen der Ablaufsteuerung erkennbar. Während Phase 1 zwischen 0 und 100 sec auf der Zeitachse wartet die Regeleinrichtung auf einen Sprung des Sollwerts w und tritt nach dem Sprung zum Zeitpunkt t = 100 sec in Phase 2 ein. Aufgrund der zeitoptimalen Vorsteuerung wird die volle Stellgröße $y_{max}$ ausgegeben. Nachdem die Regelgröße x(t) (Figur 3) etwa 30 % des Anstiegs überschritten hat, wird ein IT1-Modell des Prozesses in Phase 3 identifiziert und der optimale Abschaltzeitpunkt berechnet. In Figur 4 sind daher die beiden Phasen 2 und 3 nicht zu unterscheiden und gemeinsam am oberen Rand des Diagramms für den Zeitraum der vollen Stellgrößenausgabe angegeben. Nach dem berechneten Abschaltzeitpunkt wird die Stellgröße y(t) in Phase 4 voll zurückgenommen. Wenn der Aufheizvorgang sich deutlich verlangsamt hat, wird ein exakteres Modell, hier ein VZ2-Modell, identifiziert und ein PI-Regler für dieses Modell entworfen. Der Integrator des PI-Reglers wird dabei so initialisiert, daß der Regler zu Beginn der Phase 5 genau die stationäre Stellgröße ausgibt. Der zum Vergleich eingetragene Verlauf der Stellgröße yv(t) des bekannten adaptiven Reglers erreicht dagegen während der Aufheizphase nie den maximalen Wert der Stellgröße y. Infolgedessen erfolgt der Anstieg der zum Vergleich in Figur 3 eingetragenen Regelgröße xv(t) langsamer als der Anstieg der Regelgröße x(t) bei der neuen Regeleinrichtung. Bei dem bekannten adaptiven Regler ist zudem von Nachteil, daß die Regelgröße xv(t) leicht überschwingt. Dagegen läuft die Regelgröße x(t) etwa aperiodisch auf den Sollwert w zu. Zum Zeitpunkt t = 4100 sec wird erneut ein Sollwertsprung vorgegeben, bei welchem die Ablaufsteuerung in Phase 6 eintritt. Es wird nun ein genaueres VZ2-Modell durch erneute Optimierung seiner Parameter berechnet. Da jetzt ein Wert für die Prozeßverstärkung vorliegt, kann nach dem anhand des VZ2-Modells berechneten Umschaltzeitpunkt die stationäre Stellgröße $y_\infty$ für Phase 7 eingestellt werden. Die Phase 7 wird etwa während der dreifachen Dauer der vorherigen Aufheizung mit maximaler Stellgröße $y_{max}$ beibehalten und erst danach auf den PI-Regler umgeschaltet, dessen Parameter für das exaktere VZ2-Modell und dessen Integralanteil für einen stoßfreien Übergang eingestellt wurden. Die Ablaufsteuerung befindet sich danach wieder in Phase 5. An der Gegenüberstellung der Verläufe der Regelgröße xv(t) des bekannten adaptiven Reglers und der Regelgröße x(t) der neuen Regeleinrichtung in Figur 3 ist deutlich zu sehen, daß die neue Regeleinrichtung nach dem Sollwertsprung zum Zeitpunkt t = 4100 sec erheblich schneller und überschwingungsfrei auf den Sollwert zuläuft. Mit der neuen Regeleinrichtung wird somit eine wesentlich verbesserte Regelgüte erreicht.

In dem Ausführungsbeispiel wurden die Vorteile der neuen Regeleinrichtung zwar anhand eines Prozesses mit VZ2-Verhalten verdeutlicht, grundsätzlich ist es mit der neuen Regeleinrichtung aber auch möglich, Prozesse zu regeln, deren Modell neben Polstellen auch eine Zählernullstelle oder eine Totzeit aufweist. In diesen Fällen stellt sich ebenso die Regelung beim ersten Aufheizen selbständig ein, ohne daß Kenntnisse über die Regelstrecke vorab erforderlich wären. Selbst beim ersten Sprung des Sollwerts w wird dieser meist überschwingungsfrei erreicht. Ab dem zweiten Führungssprung kann mit einer noch höheren Regelgüte gerechnet werden, die einem zeitoptimalen Aufheizen bereits sehr nahe kommt. Es lassen sich nahe beieinanderliegende und weitgespreizte Zeitkonstanten, Mehrfachpole und Übertragungsnullstellen, große und kleine Verstärkungen sowie kleine Totzeiten beherrschen. Nur bei Prozessen mit Totzeit oder Übertragungsnullstellen können leichte Überschwinger beim ersten Aufheizen vorkommen.

## Patentansprüche

1. Verfahren zur Regelung eines verzögerungsbehafteten Prozesses mit Ausgleich, insbesondere zur Temperaturregelung,
**dadurch gekennzeichnet**,
   - daß nach Einschalten der Regelung und nach einem ersten Sollwertsprung die Stellgröße (y) sprungförmig zur Verringerung einer Regelabweichung (xd) in einem nichtlinearen Betrieb auf einen ersten konstanten Wert gesetzt wird, der dem Minimum oder dem Maximum der Stellgröße (y) entspricht,
   - daß, nachdem die Regelabweichung (xd) sich um 10 bis 70 % verringert hat, ein IT1-Modell des Prozesses (P) identifiziert wird,
   - daß anhand des IT1-Modells der Zeitpunkt bestimmt wird, zu welchem die Stellgröße (y) auf ihren Wert vor dem Sollwertsprung zurückgesetzt werden muß, damit die Regelgröße (x) höchstens geringfügig überschwingt,
   - daß, erst wenn die Änderungsgeschwindigkeit der Regelgröße (x) nach dem Rücksetzen der Stellgröße (y) einen vorgebbaren Grenzwert unterschreitet, ein exakteres Modell des Prozesses (P) mit Ausgleich ermittelt wird und
   - daß in Abhängigkeit von dem exakteren Modell mit Ausgleich die Parameter eines linearen Reglers (R) eingestellt werden, der danach in einem linearen Betrieb den Prozeß (P) regelt.

2. Verfahren nach Anspruch 1, **dadurch gekennzeichnet**, daß der Zeitpunkt des Rücksetzens der Stellgröße (y) so berechnet wird, daß die Regelung zeitoptimal ist.

3. Verfahren nach Anspruch 1 oder 2, **dadurch gekennzeichnet**, daß das IT1-Modell des Prozesses identifiziert wird, nachdem sich die Regelabweichung (xd) um 30 % verringert hat.

4. Verfahren nach einem der vorhergehenden Ansprüche, **dadurch gekennzeichnet**, daß im Falle einer Temperaturregelung als exakteres Modell ein VZ2-Modell identifiziert wird.

5. Verfahren nach einem der vorhergehenden Ansprüche, **dadurch gekennzeichnet**,
   - daß nach einem weiteren Sollwertsprung die Stellgröße (y) sprungförmig zur Verringerung der Regelabweichung (xd) im nichtlinearen Betrieb auf einen weiteren konstanten Wert gesetzt wird, der dem Minimum oder dem Maximum der Stellgröße (y) entspricht,
   - daß die Parameter des exakteren Modells mit Ausgleich optimiert werden,
   - daß anhand des exakteren Modells des Prozesses (P) der Zeitpunkt bestimmt wird, zu welchem die Stellgröße (y) auf einen stationären Wert gesetzt werden muß, damit die Regelgröße (x) den Sollwert (w) erreicht, und
   - daß, nachdem die Regelgröße (x) den Sollwert (w) etwa erreicht hat, wieder auf linearen Betrieb umgeschaltet wird, wobei die Parameter des linearen Reglers (R) in Abhängigkeit der optimierten Parameter des exakteren

Modells eingestellt werden.

6. Verfahren nach Anspruch 5, **dadurch gekennzeichnet**, daß vom nichtlinearen auf linearen Betrieb umgeschaltet wird, nachdem die Stellgröße (y) eine Zeitdauer auf den stationären Wert gesetzt war, die etwa das Vierfache der Zeitdauer beträgt, während welcher die Stellgröße (y) auf den weiteren konstanten Wert gesetzt war.

7. Verfahren nach einem der vorhergehenden Ansprüche, **dadurch gekennzeichnet**, daß der lineare Regler (R) ein PI-Regler ist.

8. Verfahren nach Anspruch 7, **dadurch gekennzeichnet**, daß der Integralanteil des PI-Reglers (R) so initialisiert wird, daß der Übergang vom nichtlinearen auf linearen Betrieb stoßfrei erfolgt.

9. Verfahren nach Anspruch 7 oder 8, **dadurch gekennzeichnet**, daß der PI-Regler (R) so entworfen wird, daß seine Nachstellzeit TM größer als die große Zeitkonstante T2 eines VZ2-Modells ist.

10. Verfahren nach Anspruch 9, **dadurch gekennzeichnet**, daß die Nachstellzeit TM des PI-Reglers das 1,2-fache der großen Zeitkonstante T2 des VZ2-Modells ist.

11. Regeleinrichtung zur Durchführung eines Verfahrens nach einem der vorhergehenden Ansprüche, mit einer Einrichtung (IE) zur Identifikation des Prozesses (P), welcher die Stellgröße (y) und die Regelgröße (x) aufgeschaltet sind, und mit einem linearen Regler (R), der durch eine Einrichtung zur Parameterberechnung, die in Abhängigkeit des jeweiligen Prozeßmodells und dessen Parameter die Reglerparameter berechnet, einstellbar ist und in Abhängigkeit von der Regelabweichung (xd) die Stellgröße (y) berechnet, **dadurch gekennzeichnet,**

- daß die Einrichtung (IE) zur Identifikation des Prozesses (P) zur Berechnung optimaler Parameter wahlweise eines IT1-Modells oder zumindest eines weiteren exakteren Modells mit Ausgleich umschaltbar ist und
- daß eine Ablaufsteuerung (AS) vorhanden ist, welcher der Sollwert (w), die Regelabweichung (xd) und die Parameter des jeweiligen Prozeßmodells aufgeschaltet sind, wobei durch die Ablaufsteuerung (AS) zwei Umschaltsignale erzeugt werden, die zur Auswahl des Prozeßmodells bzw. zur Betätigung eines Schalters zur wahlweisen Aufschaltung der vom linearen Regler (R) berechneten Stellgröße (y) im linearen Betrieb oder einer in der Ablaufsteuerung (AS) erzeugten Stellgröße (y) im nichtlinearen Betrieb auf dem Prozeß (P) dienen, derart,
    - daß nach Einschalten der Regelung und nach einem ersten Sollwertsprung die Stellgröße (y) sprungförmig zur Verringerung einer Regelabweichung (xd) in einem nichtlinearen Betrieb auf einen ersten konstanten Wert gesetzt wird, der dem Minimum oder dem Maximum der Stellgröße (y) entspricht,
    - daß, nachdem die Regelabweichung (xd) sich um 10 bis 70 % verringert hat, ein IT1-Modell des Prozesses (P) identifiziert wird,
- daß anhand des IT1-Modells der Zeitpunkt bestimmt wird, zu welchem die Stellgröße (y) auf ihren Wert vor dem Sollwertsprung zurückgesetzt werden muß, damit die Regelgröße (x) höchstens geringfügig überschwingt,
- daß, erst wenn die Änderungsgeschwindigkeit der Regelgröße (x) nach dem Rücksetzen der Stellgröße (y) einen vorgebbaren Grenzwert unterschreitet, ein exakteres Modell des Prozesses (P) mit Ausgleich ermittelt wird und
- daß in Abhängigkeit von dem exakteren Modell mit Ausgleich die Parameter eines linearen Reglers (R) eingestellt werden, der danach in einem linearen Betrieb den Prozeß (P) regelt.

## Claims

1. Method for controlling a self-regulating process which is subject to deceleration, in particular for temperature control, characterised

- in that after the control has been switched on and after a first setpoint step-change, the manipulated variable (y) is abruptly, in order to reduce a system deviation (xd), set in a non-linear operation to a first constant value which corresponds to the minimum or to the maximum of the manipulated variable (y),
- in that after the system deviation (xd) has been reduced by 10 to 70%, an IT1 model of the process (P) is

identified,

- in that with the aid of the IT1 model, the instant is determined at which the manipulated variable (y) has to be reset to its value before the setpoint step-change in order that the controlled variable (x) overshoots at most slightly,
- in that a more exact model of the self-regulating process (P) is established only after the rate of change of the controlled variable (x) after the resetting of the manipulated variable (y) falls below a predeterminable limiting value, and
- in that as a function of the more exact self-regulating model, the parameters of a linear controller (R) are adjusted, which controller then controls the process (P) in a linear operation.

**2.** Method according to claim 1, characterised in that the instant of the resetting of the manipulated variable (y) is calculated in such a way that the control is optimal with respect to time.

**3.** Method according to claim 1 or 2, characterised in that the IT1 model of the process is identified after the system deviation (xd) has been reduced by 30%.

**4.** Method according to one of the preceding claims, characterised in that in the case of a temperature control, a VZ2 model is identified as the more exact model.

**5.** Method according to one of the preceding claims, characterised

- in that after a further setpoint step-change, the manipulated variable (y) is abruptly, in order to reduce the system deviation (xd), set in the non-linear operation to a further constant value, which corresponds to the minimum or to the maximum of the manipulated variable (y),
- in that the parameters of the more exact self-regulating model are optimised,
- in that with the aid of the more exact model of the process (P), the instant is determined at which the manipulated variable (y) has to be set to a stationary value in order that the controlled variable (x) reaches the setpoint (w), and
- in that after the controlled variable (x) has approximately reached the setpoint (w), there is a switch-over to linear operation again, wherein the parameters of the linear controller (R) are adjusted as a function of the optimised parameters of the more exact model.

**6.** Method according to claim 5, characterised in that the switch-over from non-linear operation to linear operation takes place after the manipulated variable (y) has been set at the stationary value for a duration which is approximately four times the duration for which the manipulated variable (y) was set at the further constant value.

**7.** Method according to one of the preceding claims, characterised in that the linear controller (R) is a PI controller.

**8.** Method according to claim 7, characterised in that the integral portion of the PI controller (R) is initialised in such a way that the crossover from non-linear operation to linear operation takes place smoothly.

**9.** Method according to claim 7 or 8, characterised in that the PI controller (R) is designed in such a way that its reset time TM is greater than the large time constant T2 of a VZ2 model.

**10.** Method according to claim 9, characterised in that the reset time TM of the PI controller is 1.2 times the large time constant T2 of the VZ2 model.

**11.** Control device for carrying out a method according to one of the preceding claims, having a device (IE) for identification of the process, to which device the manipulated variable (y) and the controlled variable (x) are passed, and having a linear controller (R), which can be adjusted by a device for parameter calculation which calculates the controller parameters as a function of the respective process model and the parameters thereof, and as a function of the system deviation (xd) calculates the manipulated variable (y), characterised

- in that the device (IE) for identification of the process (P) can be switched over for the calculation of optimal parameters of an IT1 model or of at least one further more exact self-regulating model as desired, and
- in that there is a sequencing control (AS), to which the setpoint (w), the system deviation (xd) and the parameters of the respective process model are passed, with there being generated by the sequencing control (AS) two switch-over signals which are used, respectively, for the selection of the process model and for the actuation of a switch for optional feedforwarding to the process (P) of, in the linear operation, the manipulated variable (y) calculated by the linear controller (R) or, in the non-linear operation, a manipulated variable (y) generated in the sequencing control (AS), in such a way

- that after the control has been switched on and after a first setpoint step-change, the manipulated variable (y) is abruptly, in order to reduce a system deviation (xd), set in a non-linear operation to a first constant value which corresponds to the minimum or to the maximum of the manipulated variable (y),
- that after the system deviation (xd) has been reduced by 10 to 70%, an IT1 model of the process (P) is identified,
- that with the aid of the IT1 model, the instant is determined at which the manipulated variable (y) has to be reset to its value before the setpoint step-change in order that the controlled variable (x) overshoots at most slightly,
- that a more exact model of the self-regulating process (P) is established only after the rate of change of the controlled variable (x) after the resetting of the manipulated variable (y) falls below a predeterminable limiting value, and
- that as a function of the more exact self-regulating model, the parameters of a linear controller (R) are adjusted, which controller then controls the process (P) in a linear operation.

**Revendications**

1. Procédé de régulation d'un processus auto-compensateur susceptible de ralentissement, notamment de régulation de température, caractérisé par le fait

   - que, après la mise en marche de la régulation et après un premier saut de valeur de consigne, on met brusquement la grandeur réglante (y), pour réduire un écart de régulation (xd) et en une exploitation non linéaire, sur une première valeur constante qui correspond au minimum ou au maximum de la grandeur réglante (y),
   - que, après que l'écart de régulation (xd) s'est réduit de 10 à 70 %, on identifie un modèle IT1 du processus (P),
   - que, à l'aide du modèle IT1, on détermine l'instant auquel la grandeur réglante (y) doit être remise à sa valeur d'avant le saut de valeur de consigne pour que la grandeur réglée (x) suroscille au pire légèrement,
   - que, seulement lorsque la vitesse de variation de la grandeur réglée (x) après la remise à l'état initial de la grandeur réglante (y) dépasse une valeur limite prédéterminable, on détermine un modèle plus exact du processus (P) avec compensation et
   - que, en fonction du modèle plus exact avec compensation, on règle les paramètres d'un régulateur linéaire (R) qui régule ensuite le processus (P) en une exploitation linéaire.

2. Procédé selon la revendication 1, caractérisé par le fait que l'on calcule l'instant de la remise à l'état initial de la grandeur réglante (y) de telle sorte que la régulation s'effectue en un temps optimal.

3. Procédé selon la revendication 1 ou 2, caractérisé par le fait que l'on identifie le modèle IT1 du processus après que l'écart de régulation (xd) s'est réduit de 30 %.

4. Procédé selon l'une des revendications précédentes, caractérisé par le fait que, dans le cas d'une régulation de température, on identifie comme modèle plus exact un modèle VZ2.

5. Procédé selon l'une des revendications précédentes, caractérisé par le fait

   - que, après un autre saut de valeur de consigne, on met brusquement la grandeur réglante (y), pour réduire l'écart de régulation (xd) et en exploitation non linéaire, sur une autre valeur constante qui correspond au minimum ou au maximum de la grandeur réglante (y),
   - que l'on optimise les paramètres du modèle plus exact avec compensation,
   - que, à l'aide du modèle plus exact du processus (P), on détermine l'instant auquel la grandeur réglante (y) doit être remise sur une valeur stationnaire pour que la grandeur réglée (x) atteigne la valeur de consigne (w), et
   - que, après que la grandeur réglée (x) a sensiblement atteint la valeur de consigne (w), on commute de nouveau sur une exploitation linéaire, les paramètres du régulateur linéaire (R) étant réglés en fonction des paramètres optimisés du modèle plus exact.

6. Procédé selon la revendication 5, caractérisé par le fait que l'on commute de l'exploitation non linéaire à l'exploitation linéaire après que la grandeur réglante (y) a été mise sur la valeur stationnaire pendant une certaine durée qui vaut environ quatre fois la durée pendant laquelle la grandeur réglante (y) a été mise sur l'autre valeur constante.

**7.** Procédé selon l'une des revendications précédentes, caractérisé par le fait que le régulateur linéaire (R) est un régulateur PI.

**8.** Procédé selon la revendication 7, caractérisé par le fait que l'on initialise la partie intégrale du régulateur PI (R) de telle sorte que la transition de l'exploitation non linéaire à l'exploitation linéaire s'effectue sans à-coup.

**9.** Procédé selon la revendication 7 ou 8, caractérisé par le fait que l'on développe le régulateur PI (R) de telle sorte que son temps de compensation TM est plus grand que la grande constante de temps T2 d'un modèle VZ2.

**10.** Procédé selon la revendication 9, caractérisé par le fait que le temps de compensation TM du régulateur PI vaut 1,2 fois la grande constante de temps T2 du modèle VZ2.

**11.** Dispositif de régulation pour la mise en oeuvre d'un procédé selon l'une des revendications précédentes, comportant un dispositif (IE) qui est destiné à l'identification du processus (P) et qui reçoit la grandeur réglante (y) et la grandeur réglée (x) et un régulateur linéaire (R) qui peut être réglé par un dispositif destiné au calcul de paramètres et calculant les paramètres de régulateur en fonction du modèle de processus respectif et de ses paramètres et qui calcule la grandeur réglante (y) en fonction de l'écart de régulation (xd), caractérisé par le fait

- que le dispositif (IE) pour l'identification du processus (P) peut être commuté pour le calcul de paramètres optimaux, au choix, d'un modèle IT1 ou d'au moins un autre modèle plus exact avec compensation et
- qu'il y a une commande séquentielle (AS) qui reçoit la valeur de consigne (w), l'écart de régulation (xd) et les paramètres du modèle de processus respectif, cette commande séquentielle (AS) produisant deux signaux de commutation qui servent à la sélection du modèle de processus c'est-à-dire à l'actionnement d'un commutateur destiné à appliquer sélectivement sur le processus (P) la grandeur réglante (y) réglée par le régulateur linéaire (R) pendant l'exploitation linéaire ou la grandeur réglante (y) produite dans la commande séquentielle (AS) pendant l'exploitation non linéaire, de telle sorte
    - que, après la mise en marche de la régulation et après un premier saut de valeur de consigne, la grandeur réglante (y) est mise brusquement, pour réduire un écart de régulation (xd) et en une exploitation non linéaire, sur une première valeur constante qui correspond au minimum ou au maximum de la grandeur réglante (y),
    - que, après que l'écart de régulation (xd) s'est réduit de 10 à 70 %, un modèle IT1 du processus (P) est identifié,
    - que, à l'aide du modèle IT1, l'instant auquel la grandeur réglante (y) doit être remise à sa valeur d'avant le saut de valeur de consigne pour que la grandeur réglée (x) suroscille au pire légèrement est déterminé,
    - que, seulement lorsque la vitesse de variation de la grandeur réglée (x) après la remise à l'état initial de la grandeur réglante (y) dépasse une valeur limite prédéterminable, un modèle plus exact du processus (P) avec compensation est déterminé et
    - que, en fonction du modèle plus exact avec compensation, les paramètres d'un régulateur linéaire (R) qui régule ensuite le processus (P) en une exploitation linéaire sont réglés.

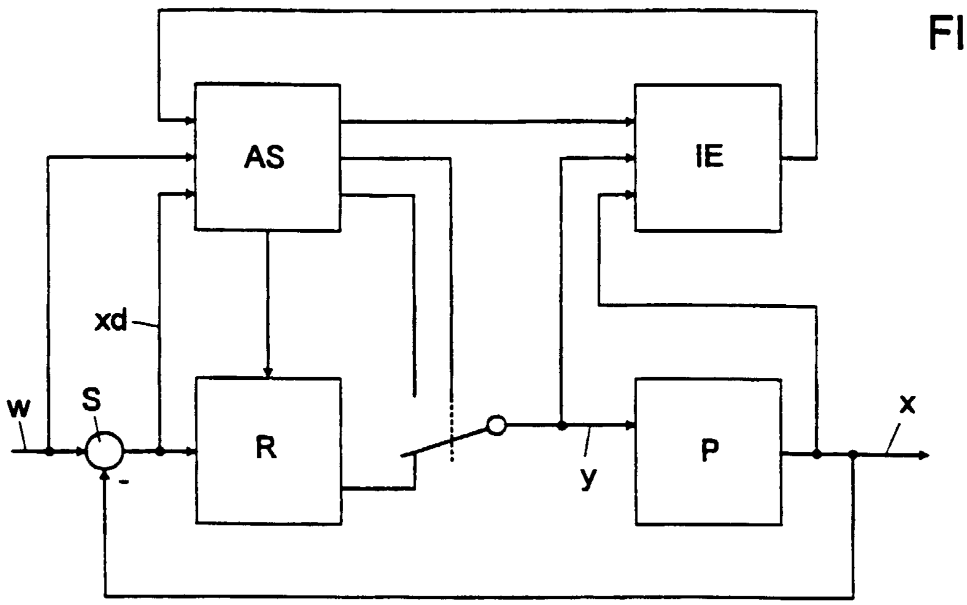


FIG 1

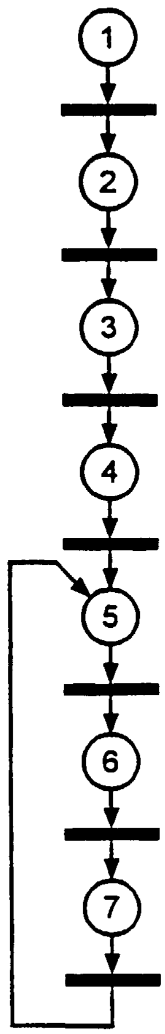


FIG 2

FIG 3

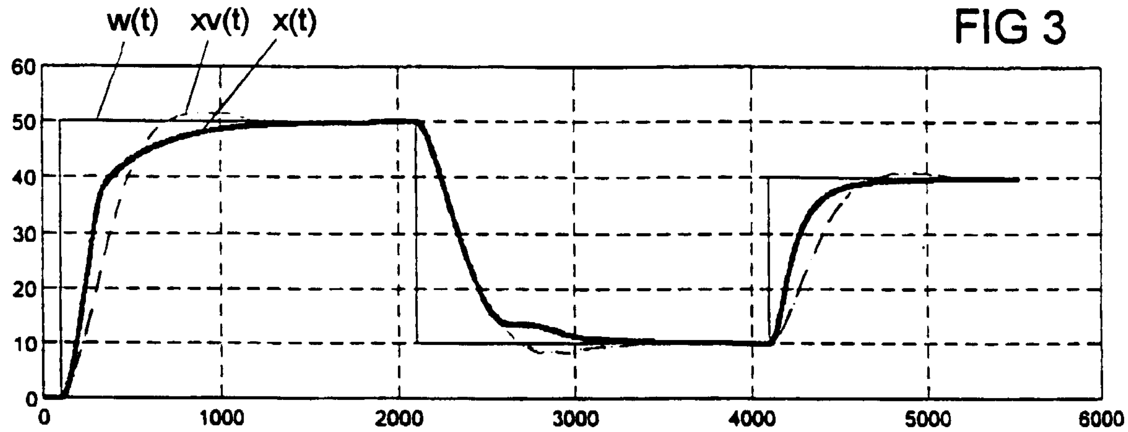
w(t)
xv(t)
x(t)
60
50
40
30
20
10
0
0
1000
2000
3000
4000
5000
6000

FIG 4

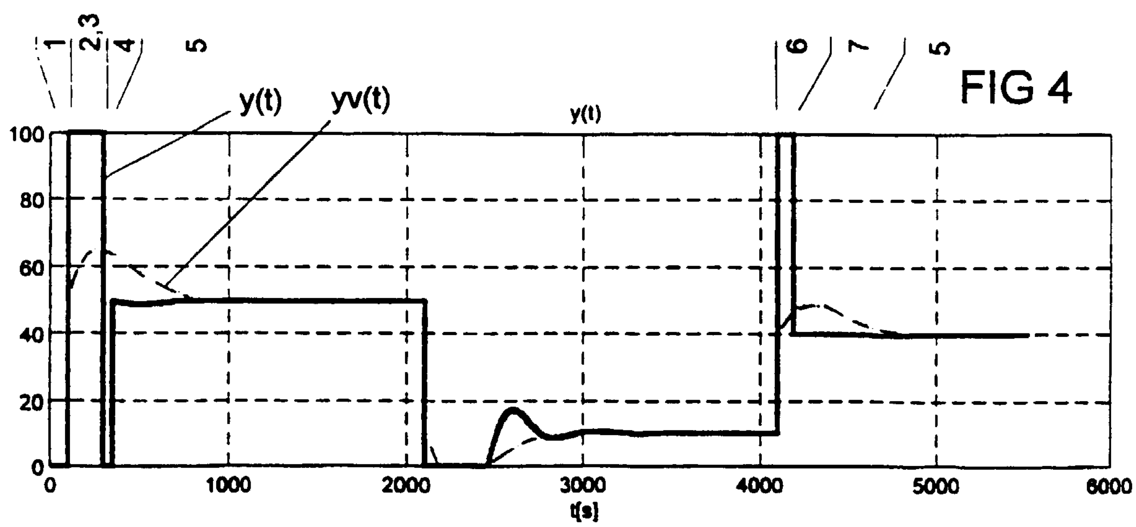
1
2,3
4
5
6
7
5
y(t)
yv(t)
y(t)
100
80
60
40
20
0
0
1000
2000
3000
4000
5000
6000
t[s]